# EUROPÄISCHE PATENTANMELDUNG

(11) **EP 2 351 663 A2**
(43) Veröffentlichungstag der Anmeldung: **03.08.2011**
(21) Anmeldenummer: 11002172.2
(22) Anmeldetag: 27.06.2006
(51) Int. Cl.: B60N 2/235

(54) **Vorrichtung zum Verriegeln und Entriegeln mit einer Sicherung gegen Selbstöffnung**

(30) Priorität: 27.06.2005 DE 102005030050; 08.08.2005 DE 102005037832
(62) Teilanmeldung aus: 06776085.0
(71) Anmelder: Johnson Controls GmbH, 51399 Burscheid (DE)
(72) Erfinder: Abraham, James, 51147 Köln (DE); Kirubaharan, Albert Reginold, 51399 Burscheid (DE); Kienke, Ingo, 42929 Wermwlskirchen (DE); Bhavani, Prasad, N.S. Palaya Bangalore 76 (IN)
(74) Vertreter: Schwöbel, Thilo K.

(57) **Zusammenfassung**

Die vorliegende Erfindung betrifft Vorrichtungen, insbesondere für einen Kraftfahrzeugsitz, mit der das Verstellen eines ersten Beschlagteils (1) und eines zweiten Beschlagteils (2) relativ zueinander verriegelbar und entriegelbar ist, mit einem Antriebmittel (7) und einer Verrastplatte (6), wobei die Verrastplatte mittels dem Antriebmittel reversibel verstellbar ist, wobei die Verrastplatte eine Verrastklinke (4) gegenüber dem ersten Beschlagteil (1) in einer Rastposition verriegelt und in einer Freigabeposition entriegelt. Weiterhin betrifft die vorliegende Erfindung einen Sitz mit einer solchen Vorrichtung sowie ein Verfahren zum Sichern einer Vorrichtung gegen Selbstöffnung.

## Beschreibung

Die vorliegende Erfindung betrifft Vorrichtungen, insbesondere für einen Kraftfahrzeugsitz, mit der das Verstellen eines ersten Beschlagteils und eines zweiten Beschlagteils relativ zueinander verriegelbar und entriegelbar ist, mit einem Antriebmittel und einer Verrastplatte, wobei die Verrastplatte mittels dem Antriebmittel reversibel verstellbar ist, wobei die Verrastplatte das Verstellen der Beschläge relativ zueinander in einer Rastposition verriegelt und in einer Freigabeposition entriegelt. Weiterhin betrifft die vorliegende Erfindung eine Vorrichtung zum Verriegeln und zum Entriegeln, einen Sitz mit einer erfindungsgemäßen Vorrichtung sowie ein Verfahren zum Sichern einer Vorrichtung gegen Selbstöffnung.

Vorrichtungen zum Verriegeln und Entriegeln von Kraftfahrzeugsitzes müssen hohen Belastungen standhalten, um sich, insbesondere bei einem Unfall, nicht ungewollt zu öffnen und zu verstellen und damit eine zusätzliche Gefahr für die Insassen der Fahrzeuges darzustellen. Es hat sich beispielsweise gezeigt, dass Neigungsverstellvorrichtungen für Sitze im Gepäckrückhaltetest dazu tendieren, sich bei großer Belastung ungewollt zu öffnen. Es hat deshalb nicht an Versuchen gefehlt, Sicherungen zur Verfügung zu stellen, die eine derartige selbsttätige Öffnung verhindern. Beispielhaft wird die Druckschrift DE 100 48 127 A1 genannt, die einen Beschlag für einen Fahrzeugsitz offenbart, bei dem an einem schwenkbar gelagerten Spannexzenter zur Sicherung der Klinke Sperrelemente vorgesehen sind, die das Verstellen des Spannexzenters bei einem Crash verhindern, so dass die Klinke sich nicht öffnen kann. Diese Vorrichtung hat jedoch den Nachteil, dass sie mit sehr geringen Toleranzen gefertigt und montiert werden muss, was sich nachteilig auf die Herstellungs- bzw. Montagekosten auswirkt.

Es war deshalb die Aufgabe der vorliegenden Erfindung, eine Vorrichtung zum Verriegelt und Entriegeln, insbesondere für ein Kraftfahrzeugsitz zur Verfügung zu stellen, die die Nachteile des Standes der Technik nicht aufweist.

Die Aufgabe wird gelöst mit einer Vorrichtung, insbesondere für einen Kraftfahrzeugsitz, mit der das Verstellen eines ersten Beschlagteils und eines zweiten Beschlagteils relativ zueinander verriegelbar und entriegelbar ist, mit einem Antriebmittel, einer Verrastplatte (6) und einer Verrastklinke (4), wobei die Verrastklinke (4) durch Verrasten mit dem ersten Beschlagteil (1) relativ zu diesem arretierbar ist, wobei die Verrastplatte mittels dem Antriebsmittel reversibel verstellbar ist, wobei die Verrastplatte das Verstellen der Verrastklinke in einer Rastposition verriegelt und in einer Freigabeposition entriegelt, wobei das Antriebmittel ein Sicherungssegment zum Sichern der Verrastplatte gegen Selbstöffnen aufweist.

Durch das zusätzliche Sicherungssegment des Antriebmittels wird die Verrastplatte gegen Selbstöffnen gesichert. Die Verrastplatte verbleibt daher bei großen Belastungen sicher in der Rastposition und verriegelt die Verrastklinke, so dass die Vorrichtung verriegelt ist.

Eine Rastposition im Sinne der Erfindung ist jede Position der Verrastplatte, in der die Verrastplatte die Verrastklinke verriegelt. Eine freigabeposition im Sinne der Erfindung ist jede Position der Verrastplatte, in der sie die Verrastklinke nicht verriegelt.

Da die Vorrichtung bei großer Belastung sicher in der Rastposition verbleibt, ermöglicht das Vorhandensein des Sicherungssegmentes das Optimieren des Verriegelungswinkels-dahingehend, dass das Entriegeln leichter und daher für den Nutzer komfortabler möglich ist. Der durch das Sicherungssegment entstandene Freiraum kann für eine komfortorientierte Auslegung genutzt werden.

Eine bevorzugte Ausführungsform, die die Aufgabe ebenfalls löst, ist eine Vorrichtung zum Verriegeln und zum Entriegeln, insbesondere eines Beschlages zum Versteifen von Teilen eines Sitzes, insbesondere eines Kraftfahrzeugsitzes, die ein erstes Beschlagteil, eine Verrastklinke und wenigstens eine Verrastplatte aufweist, wobei die Verrastklinke durch Verrasten mit dem ersten Beschlagteil relativ zu diesem arretierbar ist, wobei die Verrastplatte in eine das Verrasten sichernde Rastposition und in eine das Verrasten nicht sichernde Freigabeposition verstellbar ist, wobei die Vorrichtung ein Antriebmittel umfasst, das zumindest teilweise reversibel von einer Antriebposition in eine Sicherungsposition verstellbar ist, wobei das Verstellen der Verrastplatte von der Rastposition in die Freigabeposition nur in der Antriebposition möglich ist.

Das Antriebmittel muss zumindest teilweise in die Antriebposition verstellt werden, damit die Verrastplatte in die Freigabeposition verstellt werden kann. Solange das Antriebmittel nicht angetrieben wird, ist daher ein ungewolltes Verstellen der Verrastplatte, und daher ein Selbstöffnen der Vorrichtung, bei dem die Verrastplatte von der Rastposition in die Freigabeposition verstellt wird, nicht möglich. Auch in dieser Ausführungsform bleibt die Vorrichtung bei großen Belastungen in der Rastposition sicher verriegelt.

Die folgenden Ausführungen gelten die oben genannten Ausführungen:

Bevorzugt weist das Antriebmittel ein Sicherungssegment und ein zweites Segment auf. Die Verrastplatte ist daher entweder nur mittels dem zweiten Segment oder mittels dem zweiten Segment und dem Sicherungssegment gemeinsam von der Rastposition in die Freigabeposition und zurück verstellbar.

In einer bevorzugten Ausführungsform ist das Antriebmittel um eine Antriebachse drehbar, wobei das Sicherungssegment durch Drehen des Antriebmittels um die Antriebachse von der Sicherungsposition in die Antriebposition und die Verrastplatte durch Drehen des Antriebmittels um die Antriebachse von der Rastposition in die Freigabeposition und zurück verstellbar ist. Daher erfolgt der Antrieb des Sicherungssegmentes auf derselben Achse, wie der Antrieb der Verriegelung und Entriegelung der Vorrichtung. Es werden keine weiteren Bauteile zum Betätigen des Sicherungssegmentes benötigt.

Bevorzugt wird das Antriebmittel mittels einer Handhabe betätigt. Der Fachmann versteht, dass auch eine elektrische Betätigung möglich ist.

Bevorzugt ist das zweite Segment entgegen der Kraft eines zweiten Kraftmittels um die Antriebachse drehbar, so dass die Verrastplatte mittels der Kraft des zweiten Kraftmittels in der Rastposition gehalten wird.

Vorzugsweise weist das Sicherungssegment ein erstes Form- und/oder Kraftschlussmittel und das zweite Segment ein zweites Form- und/oder Kraftschlussmittel auf, wobei das erste sowie das zweite Form- und/oder Kraftschlussmittel zumindest teilweise mit einem dritten Form- und/oder Kraftschlussmittel der Verrastplatte in Eingriff sind. Durch den gegenseitigen Eingriff der Form- und/oder Kraftschlussmittel wirkt eine Belastung auf die Verrastplatte auch form- und/oder kraftschlüssig auf das Antriebmittel, insbesondere auf das Sicherungssegment.

Bevorzugt ist das dritte Form- und/oder Kraftschlussmittel der Verrastplatte eine Verzahnung.

In einer bevorzugten Ausführungsform sind das erste Form- und/oder Kraftschlussmfttel sowie das zweite Form- und/oder Kraftschlussmittel jeweils zumindest zwei Zähne mit demselben Zahnabstand, wobei der Übergangszahnabstand zwischen dem vorderen Zahn des ersten Form- und/oder Kraftschlussmittels und dem hinteren Zahn des zweiten Form- und/oder Kraftschlussmittels, die aneinander angrenzen, ungleich dem Zahnabstand ist, bevorzugt größer. Der Übergangszahnabstand ist daher ein gewollter Teilungsfehler der Verzahnung des Antriebsmittel bzw. zwischen dem Sicherungssegment und dem zweiten Segment, der einen Leerlauf ermöglicht, durch den das Entriegeln der Vorrichtung sehr gleichmäßig möglich Ist, wenn die Entriegelung durch das Antriebmittel erfolgt. Dagegen führt der Übergangszahnabstand zwischen den Zähnen des Sicherungssegmentes und den Zähnen des zweiten Segmentes bei einer großen auf die Verrastplatte wirkenden Belastung, durch die diese zum Selbstöffnen tendiert, zu einer Kollision der Verzahnung der Verrastplatte mit der des Antriebmittels. Die Verrastplatte verstellt sich daher, insbesondere aufgrund von Toleranzen, geringfügig, wird dann jedoch durch die Kollision sicher gestoppt, so dass die Verrastplatte in der Rastposition verbleibt und die Vorrichtung weiterhin sicher verriegelt ist.

Bevorzugt ist die Verrastplatte um eine Verrastachse drehbar. Der Leerlauf entspricht dann einem Drehwinkel der Verrastplatte von ca. 3 - 5°.

In einer weiteren bevorzugten Ausführungsform ist das erste Form- und/oder Kraftschlussmiftel ein Sicherungsmittel, das in der Rastposition in Eingriff mit einem vorderen Rastzahn des dritten Form- und/oder Kraftschlussmittels der Verrastplatte ist. Bei großer Belastung wird das Verstellen der Verrastplatte von der Rastposition in die Freigabeposition durch Zusammenwirken des Rastzahns mit dem Sicherungsmittel blockiert.

Der Fachmann versteht, dass der Rastzahn das Sicherungsmittel in der Rastposition bevorzugt hintergreift. In dieser Ausführungsform ist das Sicherungssegment vorzugsweise entgegen der Kraft eines ersten Kraftmittels um die Antriebachse drehbar, so dass das Sicherungssegment die Verrastplatte zusätzlich mittels der Kraft des ersten Kraftmittels in der Rastposition hält. Das erste Kraftmittel bewirkt, dass das Sicherungssegment bei Belastung, beispielsweise bei Fahrt des Fahrzeugs, in einer Position gehalten wird und nicht klappert.

Ebenfalls bevorzugt umfasst das Sicherungsmittel ein Verstellmittel, das in der Rastposition an einer Kontur des vorderen Rastzahns anliegt. In dieser Ausführungsform wird das Verstellmittel bei Antrieb des Sicherungssegmentes vor und/oder während des Verstellens der Verrastplatte verstellt, so dass es in der Antriebposition des Sicherungssegmentes die Verrastplatte nicht beim Verstellen behindert.

Bei Antrieb des Antriebmittels wird das zweiten Segment gemeinsam mit dem Sicherungssegment verstellt, so dass das Sicherungsmittel den Rastzahn nicht behindert. Aufgrund von Toleranzen der Vorrichtung, beispielsweise aufgrund von Fertigungs- oder Herstellungstoleranzen, entsteht gegebenenfalls ein geringer Leerlauf beim Verstellen der Verrastplatte von der Rastposition in die Freigabeposition. Im wesentlichen ist das Verstellen jedoch ohne einen zusätzlichen Leerlauf möglich ist. Der Entriegelungswinkel ist daher im Gegensatz zur o. g. Ausführungsform, die einen bewussten zusätzlichen Leerlauf vorsieht, kleiner.

Die folgenden Ausführungen gelten für alle oben beschriebenen Ausführungsformen der Erfindung.

Vorzugsweise weist das Sicherungssegment zumindest einen Anschlag und das zweite Segment zumindest einen Gegenanschlag auf, so dass beim Verstellen des Antriebsmittels das zweite Segment vom Sicherungssegment mitverstellt wird.

Bevorzugt weist das Antriebmittel ein Keilwellenprofil auf, das an der Antriebachse anliegt, so dass das zweites Segment beim Drehen der Antriebachse nicht verrutscht.

Weitere vorteilhafte Ausgestaltungen der Erfindung sind in den Unteransprüchen beschrieben.

Das Aufteilen des Antriebmittels in das Sicherungssegment und das zweite Segment ermöglicht eine erheblich größere Sicherheit gegen Selbstöffnen bei einem Unfall. Die Vorrichtung ist leichter entriegelbar. Der zusätzliche Bauteileaufwand beschränkt sich auf ein oder zwei Bauteile und ist daher sehr gering. Das Antriebmittel ist durch "Zusammenstecken" schnell und einfach montierbar. Die zusätzlichen Herstellungs-und Montagekosten sind daher gering.

Ein weiterer Gegenstand der vorliegenden Erfindung ist eine Vorrichtung, insbesondere für einen Kraftfahrzeugsitz, mit der das Verstellen eines ersten Beschlagteils und eines zweiten Beschlagteils relativ zueinander verriegelbar und entriegelbar ist, mit einem Antriebmittel, einer Verrastplatte und einer Verrastklinke, wobei die Verrastklinke durch Verrasten mit dem ersten Beschlagteil relativ zu diesem arretierbar ist, wobei die Verrastplatte mittels dem Antriebmittel reversibel verstellbar ist und die Verrastplatte das Verstellen der Verrastklinke in einer Rastposition verriegelt sowie in einer Freigabeposition entriegelt, bei der zwischen die Außenkontur der Verrastplatte und einem Blockierungsmittel, das an dem zweiten Beschlagteil angeordnet ist, ein Sicherungsmittel anbringbar ist.

Es war für den Fachmann überaus erstaunlich und nicht zu erwarten, dass es mit der erfindungsgemäßen Vorrichtung gelingt, ein selbsttätiges Entriegeln der Verrastklinke sicher zu verhindern. Die erfindungsgemäße Vorrichtung ist einfach und kostengünstig herzustellen und zu montieren. Selbst bei vergleichsweise großen Fertigungstoleranzen ist die erfindungsgemäße Vorrichtung funktionsfähig. Das Blockiermittel ist vorzugsweise als mitfahrende Barriere ausgeführt, so dass es mit der erfindungsgemäßen Vorrichtung möglich ist Toleranzen auszugleichen und kein Verlust an Festigkeit auftritt.

Erfindungsgemäß weist die Vorrichtung ein Sicherungsmittel auf, dass zur Sicherung zwischen der Verrastplatte und dem Blockierungsmittel angeordnet ist. Vorzugsweise ist dieses Sicherungsmittel mit dem Antriebsmittel, das die Rastplatte in die Rastposition bzw. in die Freigabeposition bewegt, verbunden. Dadurch kann gleichzeitig mit der jeweiligen Verstellung der Rastplatte das Sicherungsmittel entweder angebracht oder entfernt werden.

Bei dem Sicherungsmittel kann es sich um jedes dem Fachmann geläufige Sicherungsmittel handeln. Vorzugsweise handelt es sich bei dem Sicherungsmittel jedoch um eine Kugel, einen Zylinder oder um ein Sicherungsmittel, das nur in eine Richtung drehbar gelagert ist.

Vorzugsweise ist zwischen der Verrastplatte, dem Blockierungsmittel und dem Sicherungsmittel ein gewisses Spiel vorhanden, das erstbei einer Überlast, beispielweise einem Crash, eliminiert wird. Diese Ausführungsform der vorliegenden Erfindung hat den Vorteil, dass die erfindungsgemäße Vorrichtung unter Normalbedingungen mit einem vergleichsweise geringen Kraftaufwand bedienbar ist.

Die Aufgabe wird ebenfalls gelöst mit einem Sitz, der eine erfindungsgemäße Vorrichtung aufweist. Die Sicherheit, das sich die Vorrichtung des Sitzes nicht ungewollt löst, insbesondere bei einem Unfall, ist erheblich verbessert. Beispielsweise bei Verwendung der Vorrichtung zum Verriegeln und Entriegeln der Neigung der Lehne gegenüber dem Sitzteil eines Sitzes in einem Kraftfahrzeug löst sich auch bei Belastung der Lehne, beispielsweise durch in den Fahrgastraum geschleudertes Gepäck bei einem Unfall, die Neigungsverstellung nicht. Für den Insassen bietet der erfindungsgemäße Sitz daher eine größere Sicherheit. Außerdem ist der Sitz leichter entriegelbar.

Ein weiterer Gegenstand der vorliegenden Erfindung ist ein Verfahren zum Entriegeln einer Vorrichtung zum Verriegeln und Entriegeln, wobei die Vorrichtung ein Antriebmittel mit einem Sicherungssegment und einem zweiten Segment, eine Verrastplatte sowie eine Verrastklinke aufweist, wobei das Sicherungssegment von einer Sicherungsposition in eine Antriebposition verstellt wird, bevor und/oder während die Verrastplatte mittels dem Antriebmittel von der Rastposition, in der in der sie das Verstellen der Verrastklinke (4) verriegelt, so dass die Vorrichtung verriegelt ist, in eine Freigabeposition, in der sie das Verstellen der Verrastklinke (4) nicht verriegelt, so dass die Vorrichtung entriegelt ist, verstellt wird. Durch Aufteilen des Antriebmittels in ein Sicherungssegment und ein zweites Segment ist auf sehr kostengünstige Weise ein Entriegelungsablauf realisierbar, der sehr leicht betätigbar ist. Solange das Antriebmittel, insbesondere das Sicherungssegment, nicht verstellt wird, ist die Verrastplatte in der Rastposition gesichert und die Vorrichtung verriegelt.

Im folgenden wird die Erfindung anhand der Figuren 1 bis 16 erläutert. Diese Erläuterungen sind lediglich beispielhaft und schränken den allgemeinen Erfindungsgedanken nicht ein.
- **Figur 1**: zeigt eine Ausführungsform einer erfindungsgemäßen Vorrichtung.
- **Figur 2**: zeigt eine erfindungsgemäße Vorrichtung zumindest teilweise in einer Explosionsdarstellung.
- **Figur 3**: zeigt eine weitere Ausführungsform einer erfindungsgemäßen Vorrichtung.
- **Figur 4**: zeigt die Verrastplatte in einem vergrößerten Ausschnitt der Vorrichtung der Figur 3 in der Rastposition sowie das Antriebmittel in der Sicherungsposition.
- **Figur 5**: zeigt das Entriegeln der Vorrichtung der **Figuren 3** **und** **4****,** wobei die Verrastplatte in der Rastposition und in der Freigabeposition dargestellt ist und wobei das Antriebmittel in der Antriebposition dargestellt ist.
- **Figur 6**: zeigt eine erfindungsgemäße Vorrichtung in einer Explosionsdarstellung.
- **Figur 7**: zeigt eine weitere Ausführungsform einer erfindungsgemäßen Vorrichtung.
- **Figur 8**: zeigt die erfindungsgemäße Vorrichtung der **Figur 7****.**
- **Figur 9**: zeigt eine weitere erfindungsgemäße Vorrichtung.
- **Figur 10**: zeigt die erfindungsgemäße Vorrichtung jedoch ohne das Blockier- und das Sicherungsmittel.
- **Figur 11**: zeigt eine Ausführungsform der erfindungsgemäßen Vorrichtung im blockierten Zustand,
- **Figur 12**: zeigt die Vorrichtung gemäß Figur 11 im entriegelten Zustand,
- **Figur 13**: zeigt die Vorrichtung gemäß Figur 11 bei maximalem Spiel,
- **Figur 14**: zeigt die Vorrichtung gemäß Figur 11 bei minimalem Spiel,
- **Figur 15**: zeigt eine weitere Ausführungsform der erfindungsgemäßen Vorrichtung im blockierten Zustand und
- **Figur 16**: zeigt die Vorrichtung gemäß Figur 15 im entriegelten Zustand.

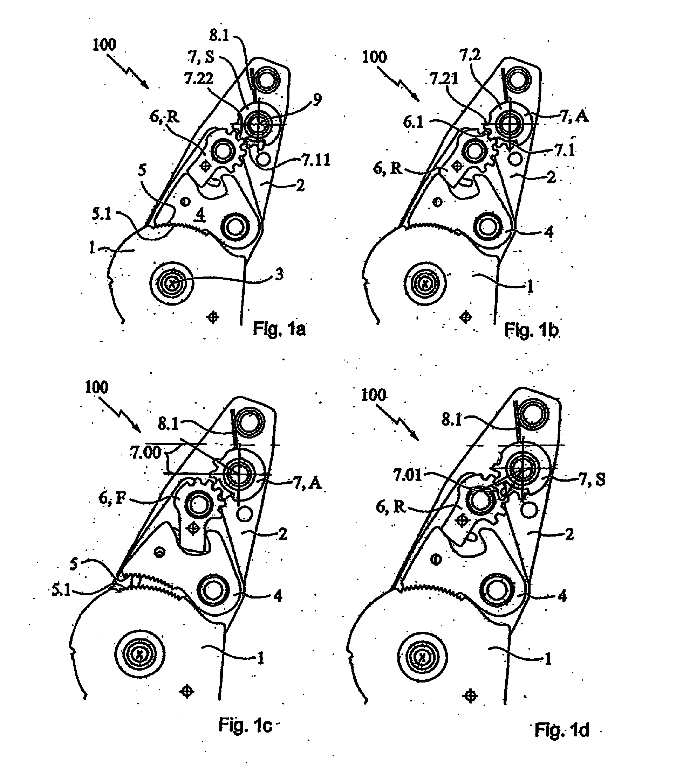

**Figur 1** zeigt eine Ausführungsform einer erfindungsgemäßen Vorrichtung 100. Die Vorrichtung 100 ist ein Neigungsversteller (Recliner) zum Verstellen der Neigung einer Lehne eines Sitzes, die nicht gezeigt ist, gegenüber dem Sitzteil des Sitzes, das ebenfalls nicht gezeigt ist, wobei ein erstes Beschlagteil 1 an dem Sitzteil und ein zweites Beschlagteil 2 an der Lehne des Sitzes angeordnet sind. Daher weisen das erste und das zweite Beschlagteil 1, 2 eine gemeinsame Drehachse 3 auf, so dass durch Drehen des zweiten Beschlagteils 2 um die Drehachse 3 das zweite Beschlagteil 2 relativ zum ersten Beschlagteil 1 verstellbar ist. Die Vorrichtung 100 weist eine Verrastklinke 4 mit Form- und/oder Kraftschlussmitteln 5, hier einer Verzahnung, sowie eine Verrastplatte 6 auf. Die Verrastplatte 6 wirkt in ihrer Rastposition R form- und/oder kraftschlüssig mit der Verrastklinke 4 zusammen, die ihrerseits in einer Rastposition R form- und/oder kraftschlüssig mit einer Gegenverzahnung 5.1 des ersten Beschlagteils 1 zusammenwirkt. Die Verrastklinke ist drehbar an dem zweiten Beschlagteil 2 angeordnet, so dass sowohl das zweite Beschlagteil 2 als auch die Verrastklinke 4 in der Rastposition R relativ zum ersten Beschlagteil 1 arretiert sind. Die Verrastplatte 6 ist reversibel von der Rastposition R in eine Freigabeposition F mittels einem Antriebmittel 7 verstellbar. In der Freigabeposition F wirkt die Verrastplatte 4 form- und/oder kraftschlüssig mit der Verrastklinke 6 zusammen, so dass die Verrastklinke 6 verstellt, vom ersten Beschlagteil 1 abgehoben ist und nicht form- und/oder kraftschlüssig mit dem ersten Beschlagteil 1 zusammenwirkt. Die Vorrichtung 100 ist daher in der Freigabeposition F entriegelt. Zum Verstellen der Verrastplatte 6 weist das Antriebmittel 7 ein Sicherungssegment 7.1 mit einem ersten Form- und/oder Kraftschlussmittel 7.11 - 7.1i, hier zwei zueinander starren Zähnen 7.11, 7.12, sowie ein zweites Segment 7.2 mit einem zweiten Form- und/oder Kraftschlussmittel 7.21 - 7.2i, ebenfalls zwei zueinander starre Zähne 7.21, 7.22, auf. Die Zähne 7.11, 7.12, 7.21, 7.22 des Sicherungs- sowie des zweiten Segmentes 7.1, 7.2 weisen einen gleichen Zahnabstand 7.00 auf. Dagegen ist der Ubergangszahnabstand 7.01 zwischen dem vorderen Zahn 7.11 des Sicherungssegmentes 7.1 und dem hinteren Zahn 7.22 des zweiten Segmentes 7.2, die aneinander anliegen, in einer Sicherungsposition S des Antriebmittels 7 größer als der Zahnabstand 7.00. Die Zähne 7.11, 7.12, 7.21, 7.22 des ersten und des zweiten Form- und/oder Kraftschlussmfttels 7.11 - 7.1 i, 7.21 - 7.2i weisen somit an dieser Übergangsstelle einen Teilungsfehler auf.

Das Antriebmittel 7 ist drehbar um eine Antriebachse 9 angeordnet und mit einer nicht dargestellten Handhabe verbunden.

Zum gewollten Verstellen der Verrastplatte 6 von der Rastposition R in die Freigabeposition F wird das Antriebmittel 7 um die Antriebachse 9 von der

Sicherungsposition S in eine Antriebposition A gedreht, und zwar bevorzugt gegen die Kraft eines ersten Kraftmittels 8.1, vorzugsweise einer Feder. Dabei wird der Übergangszahnabstand 7.01 zwischen dem vorderen Zahn 7.11 des Sicherungssegment 7.1 und dem hinteren Zahn 7.22 des zweiten Segmentes 7.2 verringert, bis er in der Antriebposition A im wesentlichen gleich dem Zahnabstand 7.00 des ersten und des zweiten Form- und/oder Kraftschlussmittels 7.11 - 7.1i, 7.21 - 7.2i ist, so dass der Zahnabstand 7.00 sowie der Übergangszahnabstand 7.01 am Antriebsmittel 7 gleichmäßig ist. Bevorzugt beträgt der benötigte Drehwinkel, um den das Antriebmittel 7 von der Sicherungsposition S in die Antriebposition A gedreht wird, ca. 3 - 5°. Danach werden das Sicherungssegment 7.1 und das zweite Segment 7.2 im wesentlichen synchron gedreht. Dafür weisen das Sicherungssegment 7.1 einen Anschlag 13.1 und das zweite Segment 7.2 einen Gegenanschlag 13.2 auf, die in der Antriebposition A aneinander anliegen, so dass das zweite Segment 7.2 beim Weiterdrehen mitgenommen wird. Die Verrastplatte 6 weist dritte Form- und/oder Kraftschlussmittel 6.1 auf, hier eine Teilverzahnung, die zumindest teilweise in Eingriff mit dem ersten und/oder zweiten Kraftschlussmittel 7.11 - 7.1i, 7.21 - 7.2i sind und beim Drehen des Antriebmittels 7 mit diesen zusammenwirken, so dass die Verrastplatte 6 von der Rastposition R in die Freigabeposition F verstellt wird.

Die **Figuren 1a** **-** c zeigen das Verstellen des Sicherungssegmentes 7.1 von der Sicherungsposition S in die Antriebposition A und der Verrastplatte 6 von der Rastposition R in die Freigabeposition F.
- **Figur 1a** zeigt:: Sicherungssegment 7.1 in der Sicherungsposition S, Verrastplatte 6 in der Rastposition R, -> die Vorrichtung 100 ist verriegelt.
- **Figur 1b** zeigt:: Sicherungssegment 7.1 in der Antriebposition A, Verrastplatte 6 in der Rastposition R, -> die Vorrichtung 100 ist verriegelt.
- **Figur 1c** zeigt:: Sicherungssegment 7.1 in der Antriebposition A, Verrastplatte 6 in der Freigabeposition F, -> die Vorrichtung 100 ist entriegelt.

Bei starker Belastung auf den verriegelten Sitz, insbesondere bei einem Unfall, versucht die Verrastplatte 6 ihrerseits, beispielsweise aufgrund von Massenträgheit, das Antriebrad 7 entgegen der Kraft des Kraftmittels 9 in Richtung zur Freigabeposition F zu verstellen, s. **Figur 1d**. Aufgrund des größeren Übergangszahnabstandes 7.01 gegenüber dem Zahnabstand 7.00 des ersten und des zweiten Form- und/oder Kraftschlussmiftels 7.11 - 7.1i, 7.21 - 7.2i kann das dritte Form- und/oder Kraftschlussmittel 6.1 der Verrastplatte 6 nicht in die Zähne 7.11, 7.12 des ersten Form- und/oder Kraftschlussmittels 7.11 - 7.1i eingreifen.

Die Zähne 7.11, 7.12, 7.21, 7.22 des Antriebmittels 7 können daher zwar die Verrastplatte 6 antreiben, ein ungewolltes Lösen der Verrastplatte 6 wird jedoch durch Sperren der Drehmomentübertragung zwischen der Verrastplatte 6 und dem Antriebmittel 7 verhindert. Die Verrastplatte 6 wird dabei zwar gegebenenfalls geringfügig von der Rastposition R aus in Richtung zur Freigabeposition F verstellt, die Rastposition R bleibt aber soweit erhalten, dass die Verrastung gesichert und die Vorrichtung verriegelt ist.
- **Figur 1d** zeigt:: Sicherungssegment 7.1 in der Sicherungsposition S, Verrastplatte 6 in der Rastposition R bei starker Belastung, -> die Vorrichtung 100 ist verriegelt.

Gegenüber herkömmlichen Vorrichtungen weist die erfindungsgemäße Vorrichtung 100 daher eine erhöhte Sicherheit gegenüber Selbstöffnung bei großer Belastung, insbesondere bei eine Unfall, auf.

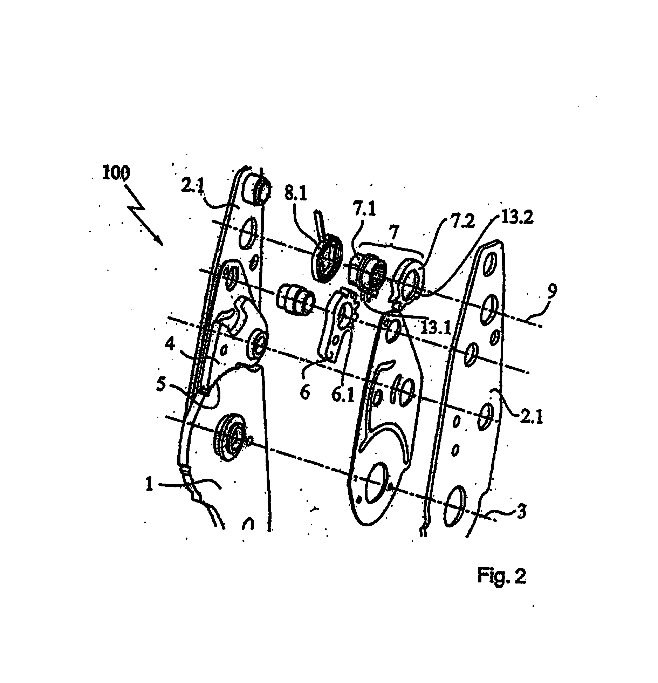

**Figur 2** zeigt eine erfindungsgemäße Vorrichtung 100 zumindest teilweise in einer Explosionsdarstellung. Das zweite Beschlagteil 2 weist zwei im wesentlichen gleiche zweite Beschlagteilkomponenten 2.1 auf, die parallel zueinander angeordnet sind und zwischen denen das erste Beschlagteil 1, die Ven-astklinke 4, die Verrastplatte 6 sowie das Antriebmittel 7 angeordnet sind..

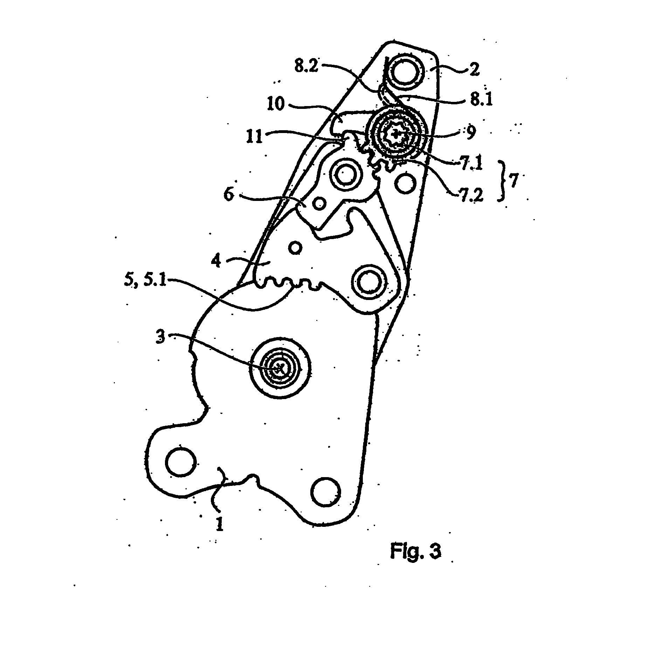

**Figur 3** zeigt eine weitere Ausführungsform einer erfindungsgemäßen Vorrichtung 100, ebenfalls ein Neigungsversteller für die Lehne eines Sitzes eines Fahrzeugs. Die Vorrichtung 100 weist ebenfalls das erste Beschlagteil 1, das zweite Beschlagteil 2, die Verrastklinke 4 und die Verrastplatte 6 auf. Das zweite Beschlagteil 2 ist gegenüber dem ersten Beschlagteil 1 um die Drehachse 3 drehbar. Um das Drehen des zweiten Beschlagteils 2 zu verriegeln, weist die Verrastklinke 4 als Form-und/oder Kraftschlussmittel die Verzahnung 5 auf, mit der sie in Eingriff mit der Gegenverzahnung 5.1 des ersten Beschlagteils 1 ist. Die Verrastklinke 4 wird durch die Verrastplatte 6 in der Rastposition R gesichert und ist in die Freigabeposition F verstellbar, in der die Vorrichtung 100 entriegelt ist. Weiterhin weist die Vorrichtung 100 ebenfalls ein Antriebmittel 7 mit einem Sicherungssegment 7.1 und einem zweiten Segment 7.2 auf, dass um die Antriebachse 9 drehbar ist.

Im Gegensatz zu den erfindungsgemäßen Vorrichtungen 100 der **Figuren 1** **und** **2** ist das erste Form und/oder Kraftschlussmittel 7.11 - 7.1i des Sicherungssegmentes 7.1 ein Sicherungsmittel 10 in Form eines Haken, der in der Rastposition R der Verrastplatte 6 kraft- und/oder formschlüssig mit dem vorderen Rastzahn 11 des dritten Form- und/oder Kraftschlussmittels 6.1 der Verrastplatte 6 zusammenwirkt. Außerdem weist die Vorrichtung 100 ein erstes Kraftmittel 8.1 sowie ein zweites Kraftmittel 8.2 auf, wobei das Sicherungssegment 7.1 entgegen der Kraft des ersten Kraftmittels 8.1 verstellbar ist und das zweite Segment 7.2 entgegen der Kraft des zweiten Kraftmittels 8.2. Beide Kraftmittel 8.1, 8.2 halten daher die Verrastplatte 6 in der Rastposition R.

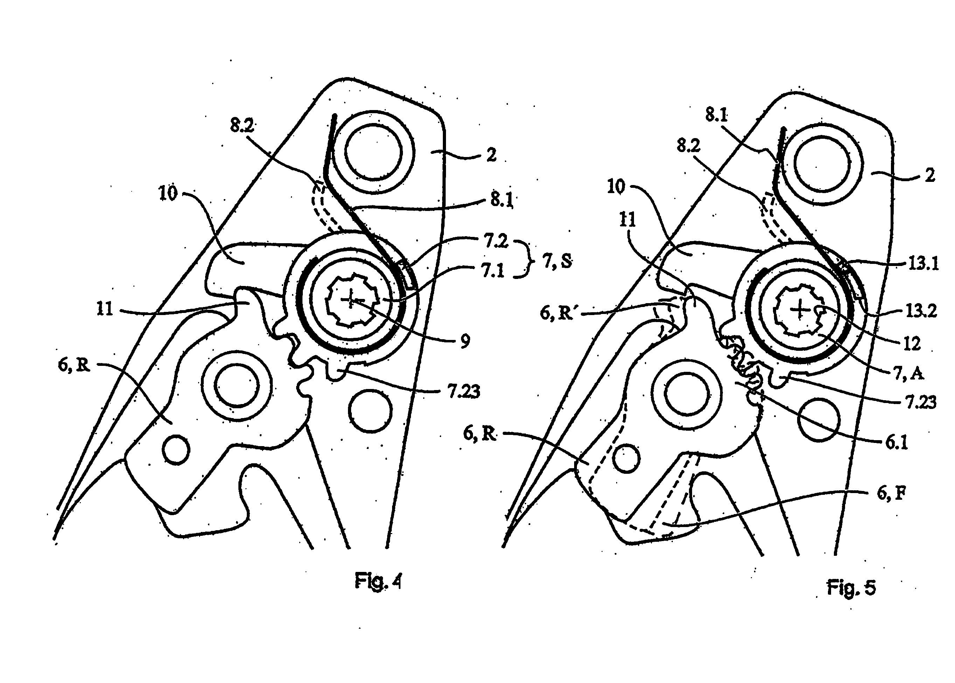

**Figur 4** zeigt die Verrastplatte 6 in einem vergrößerten Ausschnitt der Vorrichtung 100 der Figur 3 in der Rastposition R sowie das Antriebmittel 7 in de. Sicherungsposition S. Unter der Wirkung äußerer Kräfte, die beispielsweise auf die Verrastklinke 4 wirken, kann sich die Verrastplatte 6 nicht ungewollt öffnen, da das Sicherungsmittel 10 form- und/oder kraftschlüssig mit dem Rastzahn 11 zusammenwirkt und ein Verstellen der Verrastplatte 6 daher blockiert.

**Figur 5** zeigt das Entriegeln der Vorrichtung 100 der **Figuren 3** und **4****,** wobei die Verrastplatte 6 in der Rastposition R, R' und in der Freigabeposition F dargestellt ist und wobei das Antriebmittel 7 in der Antriebposition A dargestellt ist. Beim Betätigen einer nicht dargestellten Handhabe, die ein über ein Keilwellenprofil 12 des Antriebmittels, das an der Antriebachse 9 anliegt, eingeleitetes Drehmoment erzeugt, wird das Sicherungsmittel 10 gegen die Kraft des ersten Kraftmittels 8.1 verdreht, bis der Rastzahn 11 nicht mehr vom hakenartigen Sicherungsmittel 10 umfasst wird. Dafür ist im wesentlichen kein zusätzliches Verstellen des Antriebmittels 7, also im wesentlichen kein zusätzlicher Leerlauf, erforderlich. Weiterhin wird das Drehmoment über den ersten Anschlag 13.1 des Sicherungssegmentes 7.1 und den zweiten Anschlag 13.2 des zweiten Segmentes 7.2 auf das zweite Segment 7.2 übertragen, so dass sich das Sicherungssegment 7.1 und das zweite Segment 7.2 synchron um die Antriebachse 9 drehen. Dabei wird die Verrastplatte 6 in die Freigabeposition F verstellt. Das erste und das zweite Kraftmittel sind bevorzugt Federn.

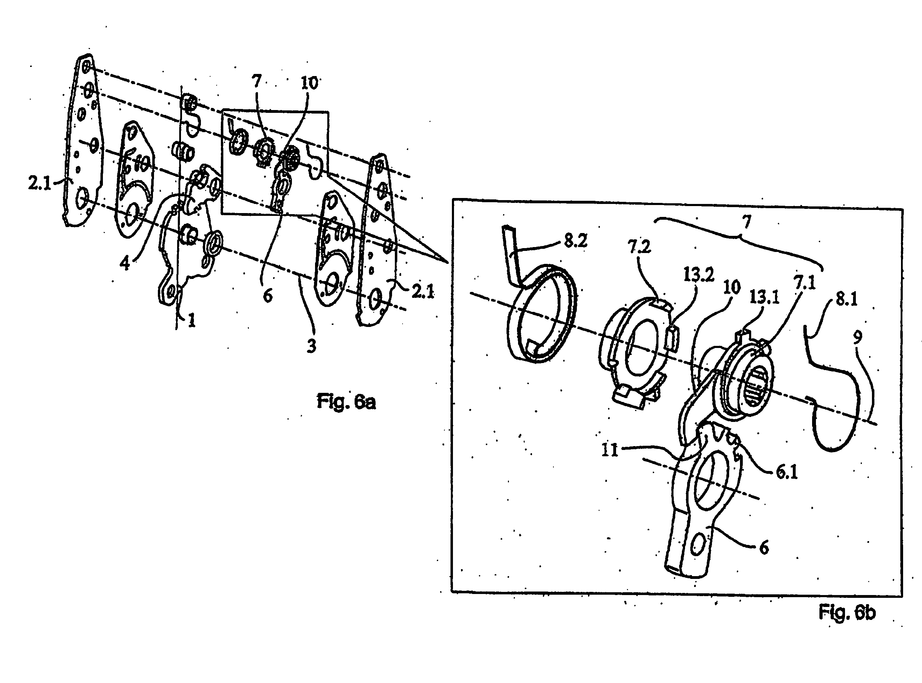

**Figur 6** zeigt die erfindungsgemäße Vorrichtung mit einem Antriebmittel analog dem der Figuren 4 und 5 in einer Explosionsdarstellung. Entsprechend der Ausführungsform der **Figur 2** umfasst auch diese Ausführungsform zwei im wesentlichen gleiche zweite Beschlagteilkomponenten 2.1, die parallel zueinander angeordnet sind und zwischen denen das erste Beschlagteil 1, die Verrastklinke 4, die Verrastplatte 6 sowie das Antriebmittel 7 angeordnet sind.

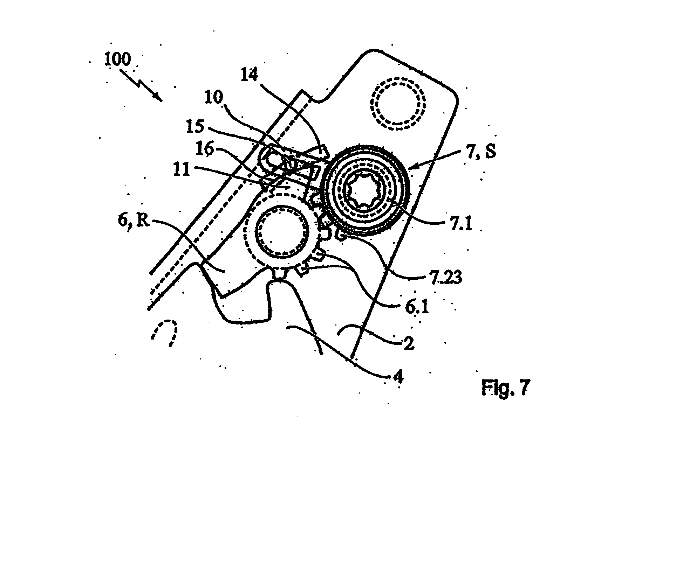

**Figur 7** zeigt eine weitere Ausführungsform einer erfindungsgemäßen Vorrichtung 100. In dieser Ausführungsform weist das Sicherungssegment 7.1 als Sicherungsmittel 10 eine Kulisse und ein Verstellmittel 15 auf, wobei das Verstellmittel 15 ein Bolzen ist, der entlang der Kulisse verstellbar ist. Das Verstellmittel 15 wird außerdem entlang einem Führungsmittel 14 des zweiten Beschlagteils 2 geführt. Das Führungsmittel 14 ist ebenfalls eine Kulisse. Im Folgenden werden die Begriffe Verstellmittel 15 und Bolzen synonym verwendet. Die **Figur 7** zeigt die Verrastplatte 6 in der Rastposition R und das Sicherungssegment 7.1 des Antriebmittels 7 in der Sicherungsposition S. Beim Verstellen des Sicherungssegmentes 7.1 von der Sicherungsposition S in die Antriebposition A wird der Bolzen 15 entlang einer Kontur 16 des vorderen Rastzahns 11 der dritten Form-und/oder Kraftschlussmittel 6.1 der Verrastplatte 6 verstellt. Dabei wird die Verrastplatte 6 gleichzeitig mittels der zweiten Form- und/oder Kraftschlussmittel 7.21 - 7.2i des zweiten Segmentes 7.2 verstellt.

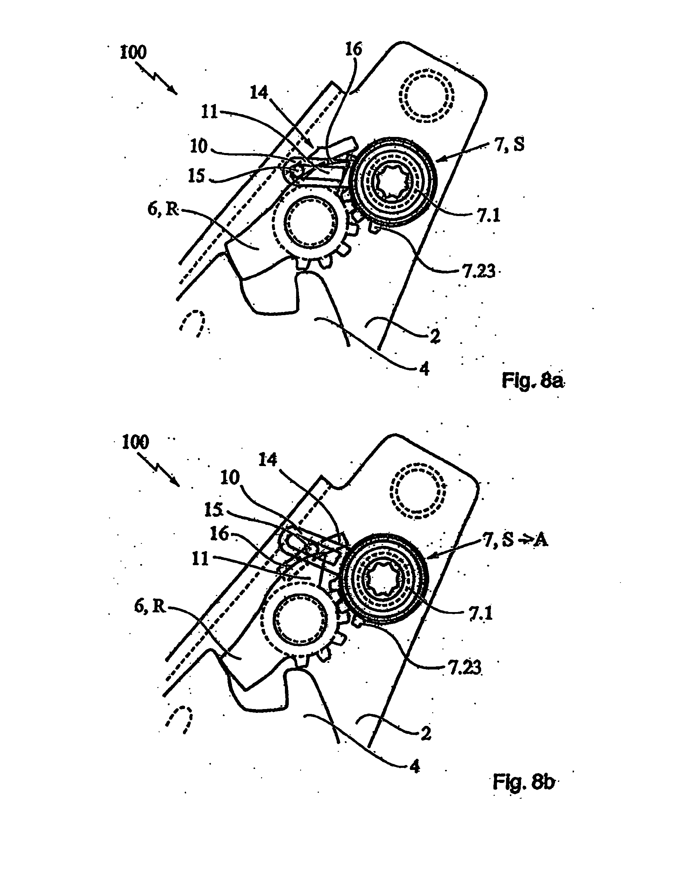

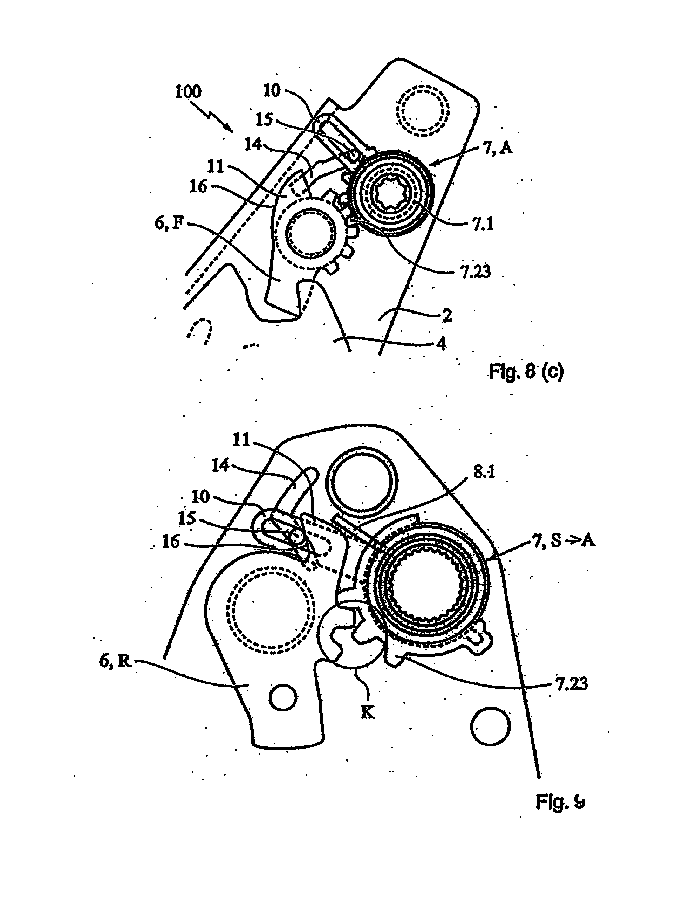

**Figur 8** zeigt die erfindungsgemäße Vorrichtung 100 der **Figur 7****.** Die Figur 8a zeigt den verriegelten Zustand der Vorrichtung 100. Wenn das Antriebmittel 7 nicht verstellt wird, ist die Verrastplatte 6 durch den Bolzen 15 in jeder Rastposition R gesichert. Die Figur 8b zeigt eine Position des Sicherungssegmentes 7.1 beim Verstellen des Sicherungssegmentes 7.1 von der Sicherungsposition S in die Antriebposition A. Die Verrastplatte 6 befindet sich noch in der Rastposition R. Um die Sicherheit gegen Selbstöffnung weiter zu erhöhen, weist das Führungsmittel 14 eine Krümmung auf, so dass ein Verstellen des Bolzens 15 aufgrund einer großen Belastung verhindert wird. Die Krümmung ist weiterhin so vorgesehen, dass das Verstellen des Bolzens 15 in der Antriebposition A des Sicherungssegmentes 7.1 bzw. in der Freigabeposition F der Verrastplatte 6 leicht erfolgt. In der Antriebposition A des Sicherungssegmentes 7.1 ist der Bolzen 15 so angeordnet, dass er das Verstellen der Verrastplatte nicht behindert. Die **Figur 8c** zeigt das Sicherungssegment 7.1 in der Antriebposition A. Die Verrastplatte 6 befindet sich in der Freigabeposition F. Die Verrastklinke 4, die hier nicht gezeigt ist, bzw. die Vorrichtung 100 ist entriegelt.

**Figur 9** zeigt eine weitere erfindungsgemäße Vorrichtung 100 mit einem Sicherungsmittel 10 mit einer Kulisse und einem Bolzen 15 sowie eine Führungsmittel 14 in Form einer Kulisse. Im Gegensatz zur Vorrichtung 100 der **Figuren 7** und **8** weist das Führungsmittel 14 eine Krümmung auf, bzw. weist die Verrastplatte 6 eine Kontur 16 auf, durch die bewusst ein zusätzliches Verstellen des Antriebmittels 7, also ein Leerlauf, erforderlich ist, bevor das Sicherungssegment 7.1 die Antriebposition A erreicht hat, in der die Verrastplatte 6 von der Rastposition R in die Freigabeposition F verstellbar ist. In **Figur 9** befindet sich das Sicherungssegment 7.1 noch bzw. wieder in der Sicherungsposition S. Die Verrastplatte 6 befindet sich in der Rastposition R. Der Kreis K zeigt den Eingriff des zweiten Form- und/oder Kraftschlussmiftels 7.21 - 7.2i des zweiten Segmentes 7.2 mit den dritten Form- und/oder Kraftschlussmittein 6.1 der Verrastplatte 6. Die zweiten und dritten Form- und/oder Kraftschlussmittel 7.21 - 7.2i, 6.1 sind nicht vollständig miteinander in Eingriff.

In den Ausführungsformen der Vorrichtung der **Figuren 7 - 9** kann das Antriebmittel 7 einstückig sein, so dass das Sicherungssegment 7.1 und das zweite Segment 7.2 - abgesehen von dem Bolzen 15 des Sicherungsmittels 10 - einstückig sind.

Eine herkömmliche Vorrichtung 100 mit einem Antriebmittel, das kein Sicherungssegment 7.1 aufweist, ist an die Anforderungen eines Sitzes anpassbar, lediglich indem das Antriebmittel 7 durch ein erfindungsgemäßes Antriebmittel 7 mit einem Sicherungssegment 7.1 und einem zweiten Segment 7.2 ersetzt wird. Das Anpassen des Sitzes gemäß den Anforderungen ist daher im Baukastenprinzip einfach und kostengünstig möglich.

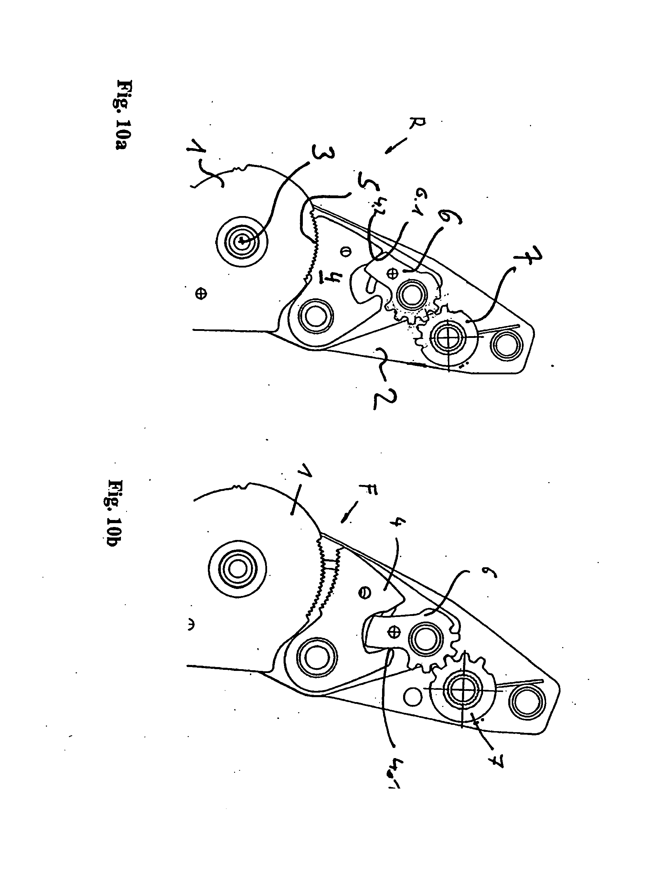

**Figur 10** zeigt eine erfindungsgemäße Vorrichtung 100 jedoch ohne das Blockier-und das Sicherungsmittel. Die Vorrichtung 100 ist ein Neigungsversteller (Recliner) zum Verstellen der Neigung einer Lehne eines Sitzes, die nicht gezeigt ist, gegenüber dem Sitzteil des Sitzes, das ebenfalls nicht gezeigt ist, wobei ein erstes Beschlagteil 1 an dem Sitzteil und ein zweites Beschlagteil 2 an der Lehne des Sitzes angeordnet sind. Daher weisen das erste und das zweite Beschlagteil 1, 2 eine gemeinsame Drehachse 3 auf, so dass durch Drehen des zweiten Beschlagteils 2 um die Drehachse 3 das zweite Beschlagteil 2 relativ zum ersten Beschlagteil 1 verstellbar ist. Die Vorrichtung 100 weist eine Verrastklinke 4 mit Form- und/oder Kraftschlussmitteln 5, hier einer Verzahnung, sowie eine Verrastplatte 6 auf. Die Verrastplatte 6 wirkt in ihrer Rastposition R (vgl. Figur 10a) form- und/oder kraftschlüssig mit der Verrastklinke 4 zusammen, die ihrerseits in einer Rastposition R form- und/oder kraftschlüssig mit der Gegenverzahnung des ersten Beschlagteils 1 zusammenwirkt. Der Form- und/oder Kraftschluss zwischen der Verrastplatte 6 und der Verrastklinke 4 erfolgt durch ein Zusammenwirken der Flächen 6.1 bzw. 4.2.. Die Verrastklinke 4 ist drehbar an dem zweiten Beschlagteil 2 angeordnet, so dass sowohl das zweite Beschlagteil 2 als auch die Verrastklinke 4 in der Rastposition R relativ zum ersten Beschlagteil 1 arretiert sein müssen. Die Verrastplatte 6 ist reversibel von der Rastposition R (vgl. Figur 10a) gegen den Uhrzeigersinn in eine Freigabeposition F (vgl. Figur 10b) mittels eines Antriebmittels 7 verstellbar. In der Freigabeposition F wirkt die Verrastplatte 4 so mit der Verrastklinke 6 zusammen, dass die Verrastplatte 4 im Uhrzeigersinn dreht. In dem vorliegenden Fall drückt die Verrastplatte 6 gegen die Fläche 4.1 der Verrastklinke und dreht diese im Uhrzeigersinn. Dadurch wirkt die Verrastklinke 4 nicht mehr form- und/oder kraftschlüssig mit dem ersten Beschlagteil 1 zusammen. Die Vorrichtung 100 ist daher in der Freigabeposition F entriegelt.

Bei einer starken Belastung auf den verriegelten Sitz, insbesondere bei einem Unfall, versucht sich die Verrastplatte 6, beispielsweise aufgrund von Massenträgheit, gegen den Uhrzeigersinn zu verdrehen, was zu einer Entriegelung der Verratklinke 4 führen kann. Um dies zu Verhindern weist die erfindungsgemäße Vorrichtung 100 ein Blockier- und ein Sicherungsmittel auf, deren Funktion anhand der folgenden Figuren erläutert wird.

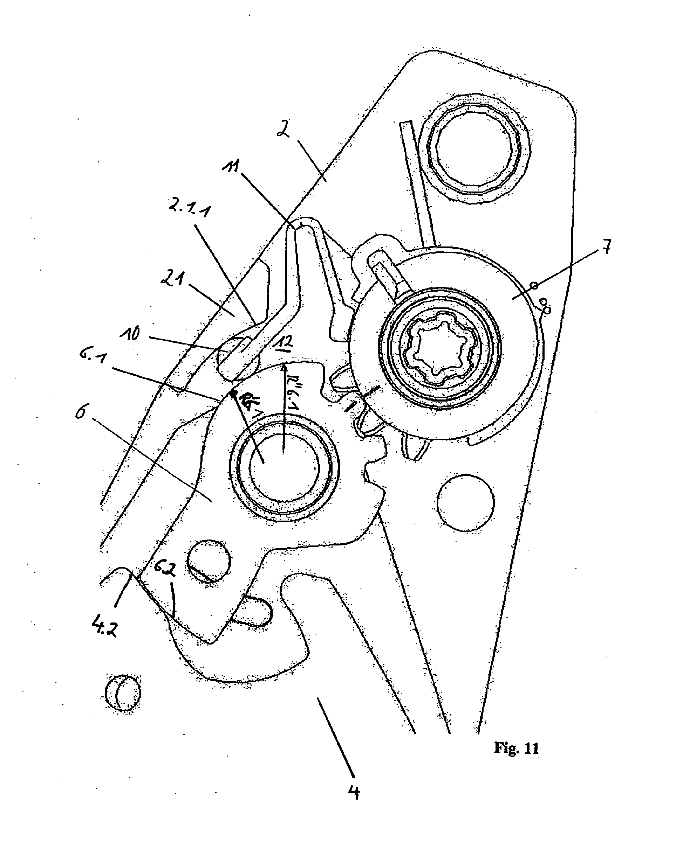

**Figur 11** zeigt eine Ausführungsform der erfindungsgemäßen Vorrichtung im verriegelten und blockierten-Zustand, in dem eine ungewollte Selbstöffnung des Recliners ausgeschlossen ist. Zusätzlich zu der Vorrichtung gemäß Figur 10 weist die erfindungsgemäße Vorrichtung gemäß **Figur 11** ein Blockierungsmittel, in dem vorliegenden Fall einen an dem Beschlag 2 angeordneten Vorsprung 2.1, auf. Des weiteren ist zwischen dem Vorsprung 2.1 und der Verrastplatte 6 eine Sicherungskugel 10 angeordnet. Diese Kugel 10 ist mit einem elastisch federnden Verbindungsmittel 11 mit dem Antrieb 7 verbunden, wobei der Verbund und/oder der Antrieb 7 so gestaltet sind, dass das Verbindungsmittel 11 in der jeweiligen Drehrichtung des Antriebs 7 nur dann mitgenommen wird, wenn dies maschinell oder manuell; d.h. gewollt, nicht jedoch durch einen Crash induziert, erfolgt. Der Antrieb 7 und das Verbindungsmittel 11 sind so gestaltet und so aufeinander abgestimmt, dass die Kugel 10 in eine ganz bestimmte Position im Spalt verbracht wird, in der noch ein möglichst geringes Spiel zwischen der Kugel und den angrenzenden Konturen 6.1 und 2.1.1 vorhanden ist. Des weiteren ist der Antrieb 7 so gestaltet, dass bei dessen gewollter Drehung im Uhrzeigersinn zunächst die Kugel 10 zumindest teilweise aus dem Spalt 12 entfernt wird, bevor sich Verrastplatte 6 zu drehen beginnt. Weiterhin ist aus der **Figur 11** erkennbar, dass die Kugel 10 zwischen der Kontur 2.1.1 des Vorsprungs 2.1 und der Kontur 6.1 der Verrastplatte 6 angeordnet ist, wobei im Normalbetrieb zwischen den Konturen und der Kugel 10 mindestens einseitig ein gewisses Spiel (nicht dargestellt) besteht. Dieses Spiel ermöglicht die Verstellung der beiden Platten 1, 2 zueinander. Bei der Gefahr einer Selbstöffnung des Recliners, beispielweise einem Crash, wird zunächst das Spiel eliminiert, bevor die Kugel 10 ihre eigentliche Sicherungsfunktion übernimmt. Die Kontur 6.1 ist als Kurve gestaltet, deren Radius sich im Uhrzeigersinn vergrößert, so dass der Radius R"6.1 größer ist als der Radius R'6.1. Dasselbe gilt für die Kontur 2.1.1 deren Steigung im Uhrzeigersinn zunimmt. Dadurch ergeben sich in jeder Lage der Kugel selbsthemmende Keilwinkel zwischen der Kugel 10 und den Konturen 6.1 und 2.1.1, die eine Selbstöffnung des Recliners verhindern; d.h. die Kugel wird bei einem Crash, bei dem sich die Verrastplatte 6 gegen den Uhrzeigersinn verdrehen möchte, zwischen den beiden Konturen 6.1 und 2.1.1 verklemmt und wird nicht aus dem Spalt 12, der zwischen den beiden Konturen vorhanden ist, herausgedrückt. Die Kugel 10 verhindert somit, dass sich die Verrastplatte 6 selbsttätig ungewollt gegen den Uhrzeigersinn verdreht und somit der Eingriff der Flächen 4.2 und 6.2 aufgehoben wird.

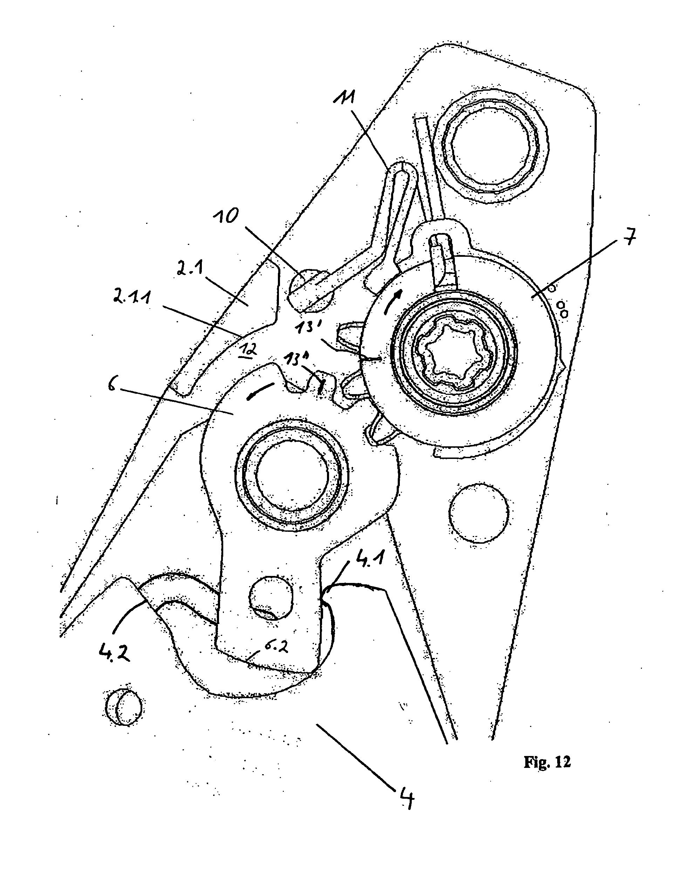

**Figur 12** zeigt die Vorrichtung gemäß Figur 11 im nicht blockierten und entriegelten Zustand. In dem vorliegenden Fall wurde der Antrieb 7 manuell oder maschinell; d.h. gewollt im Uhrzeigersinn verdreht, was anhand der Markierungsstriche 13' und 13" erkennbar ist, die sich im Gegensatz zu der Darstellung gemäß Figur 11 nicht mehr überdecken. Durch die Verdrehung des Antriebs 7 wurde zunächst das Verbindungsmittel 11 mitgenommen und hat dadurch zuerst die Kugel 10 zumindest teilweise aus dem Spalt 12 herausgezogen. Etwas zeitlich versetzt hat der Antrieb 7 die Verrastplatte 6, wie durch den Pfeil dargestellt, gegen den Uhrzeigersinn verdreht und somit den rastenden Eingriff zwischen den Flächen 4.2 und 6.2 aufgehoben. Durch die Verdrehung der Verrastplatte 6 gegen den Uhrzeigersinn gerät diese mit der Nase 4.1 der Verrastklinke in Eingriff, so dass die Verrastklinke 4 bei einer weiteren Drehung der Verrastplatte 6 im Uhrzeigersinn verdreht und wie aus **Figur 10b** ersichtlich, von dem Beschlag 1 abgehoben wird. Im Fall einer Drehung des Antriebes gegen den Uhrzeigersinn wird zum einen die Verrastplatte 6 im Uhrzeigersinn zum anderen die Verrastklinke 4 gegen den Uhrzeigersinn verdreht, so dass die Rastklinke 4 wieder form- und/oder kraftschlüssig mit dem Beschlag 1 zusammenwirkt und die Verrastplatte 6 wieder in einen rastenden Eingriff mit der Verraste 4 gelangt. Zeitlich nacheilend wird die Kugel 10 in den Spalt 12 eingeführt und wirkt dort sichernd gegen eine ungewollte Selbstöffnung des Eingriffs zwischen der Verrastplatte 6 und der Verrastklinke 4.

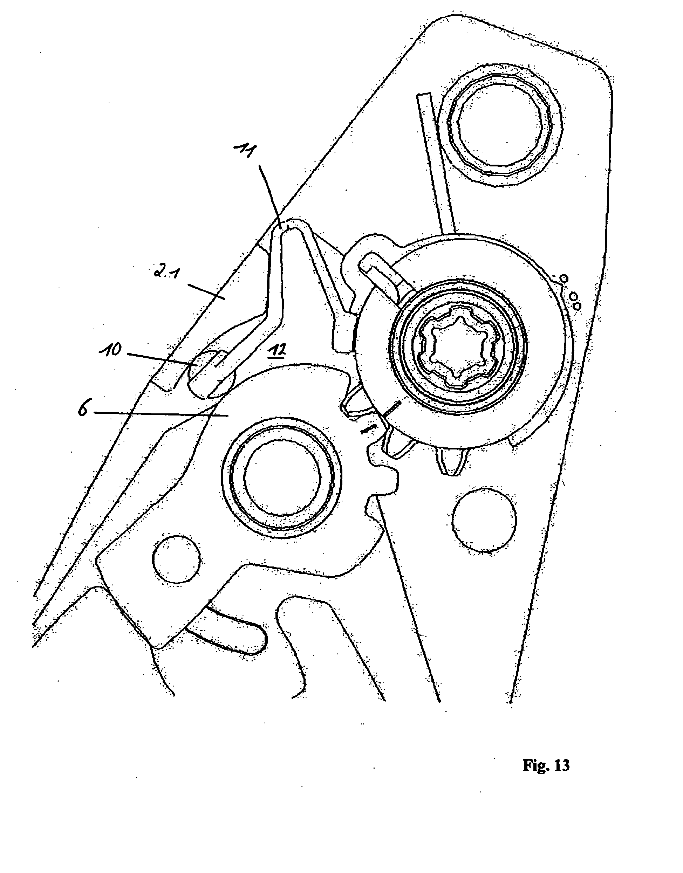

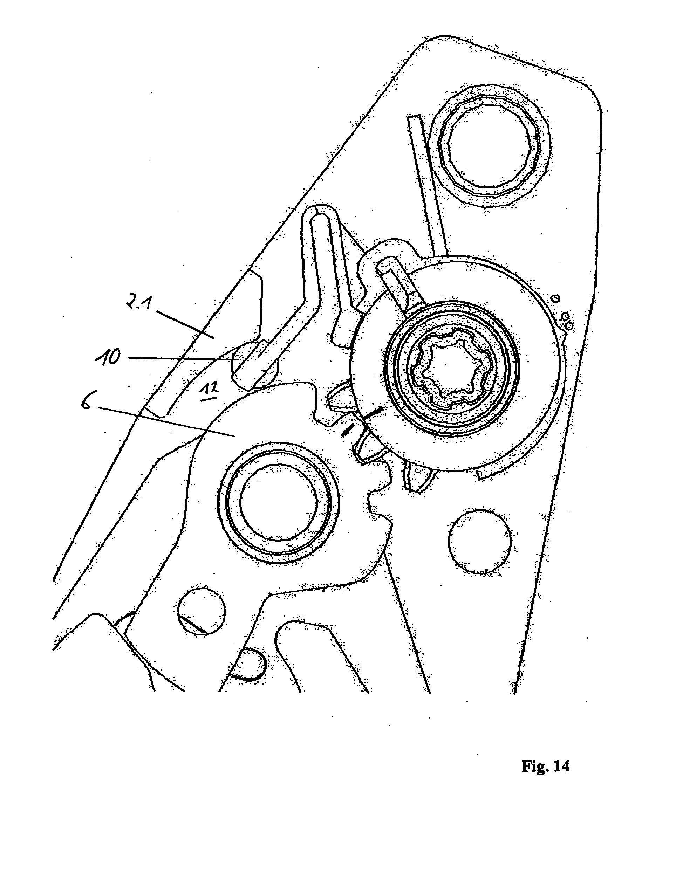

Anhand der **Figuren 13** **und** **14** ist erkennbar, dass die erfindungsgemäße Vorrichtung auch bei vergleichsweise großen Fertigungstoleranzen funktioniert. **Figur 13** zeigt die sogenannte "min-material position", d. h. die Position, bei der sich alle Toleranzen derart aufsummieren, dass der Spalt 12 seine maximale Größe erreicht. In diesem Fall wird die Kugel 10 durch den Antrieb 7 bzw. das Verbindungsmittel 11 sehr tief in den Spalt 12 hinein positioniert, so dass im Fall eines Crashes die Verrastplatte 6 nur eine sehr geringe Drehung durchführen muss, bevor die blockierende Funktion der Kugel 10 eintritt. Dieser minimale Leerweg der Verrastplatte 6 bewirkt, dass kein Festigkeitsveriust des Recliners auftritt. In **Figur 14** ist die sogenannte "max-material position" dargestellt, d. h. die Position, bei der sich die Fertigungstoleranzen so addieren, dass der Spalt 12 im Rahmen der Fertigungstoleranzen minimal ist. In diesem Fall wird die Kugel 10 durch den Antrieb 7 bzw. das Verbindungsmittel 11 ans obere Ende des Spaltes 12 positioniert und wirkt dort blockierend, ohne dass die Funktionsfähigkeit der Sicherung beeinträchtigt wird. Ansonsten wird auf die Ausführungen zu Figur 4 verwiesen.

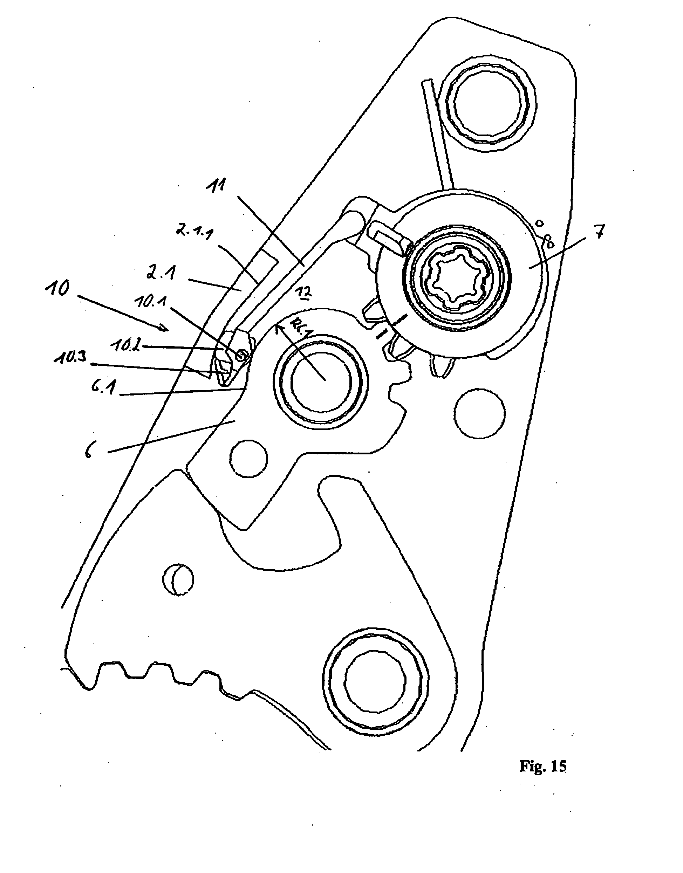

**Figur 15** zeigt im wesentlichen die Vorrichtung gemäß den **Figuren 11 bis 14****,** wobei im vorliegenden Fall die Kugel 10 durch ein Freilaufelement 10.2 ersetzt worden ist, das lediglich gegen den Uhrzeigersinn um die sich in die Papierebene erstreckende Drehachse 10.1 verdrehbar ist. Das Freilaufelement weist ein Federmittel 10.3 auf, das Freilaufelement im Uhrzeigersinn vorspannt. Des weiteren ist dem vorliegenden Fall das Verbindungsmittel 11 nicht federnd, sondern im wesentlichen starr, jedoch an dem Antrieb 7 mit einem Drehgelenk ausgestattet, ausgeführt. Außerdem sind in dem vorliegenden Fall die Konturen 6.1 bzw. 2.1.1 nicht mit einer steigenden, sondern mit einer gleichbleibenden bzw. zum Ausgang des Spaltes 12 abnehmenden Steigung versehenen Kontur ausgestattet. Bei der vorliegenden Ausführungsform wird das Freilaufelement von dem Antrieb 7 bzw. von dem Verbindungsmittel 11 an einer Stelle in dem Spalt 12 positioniert, an der kein Spiel zwischen dem Freilaufelement 10.2 und den Konturen 6.1 und 2.1.1 vorhanden ist. Das Verschieben des Freilaufelementes muss so erfolgen, dass das Freilaufelement nicht blockiert. Da das Freilaufelement 10.2 in dem vorliegenden Fall lediglich gegen den Uhrzeigersinn verdrehbar ist, verhindert es im Falle eines Crashes die Drehung der Verrastplatte 6 im Uhrzeigersinn. Ansonsten funktioniert die Vorrichtung gemäß Figur 15 analog der Vorrichtung gemäß den **Figuren 11 - 14****.**

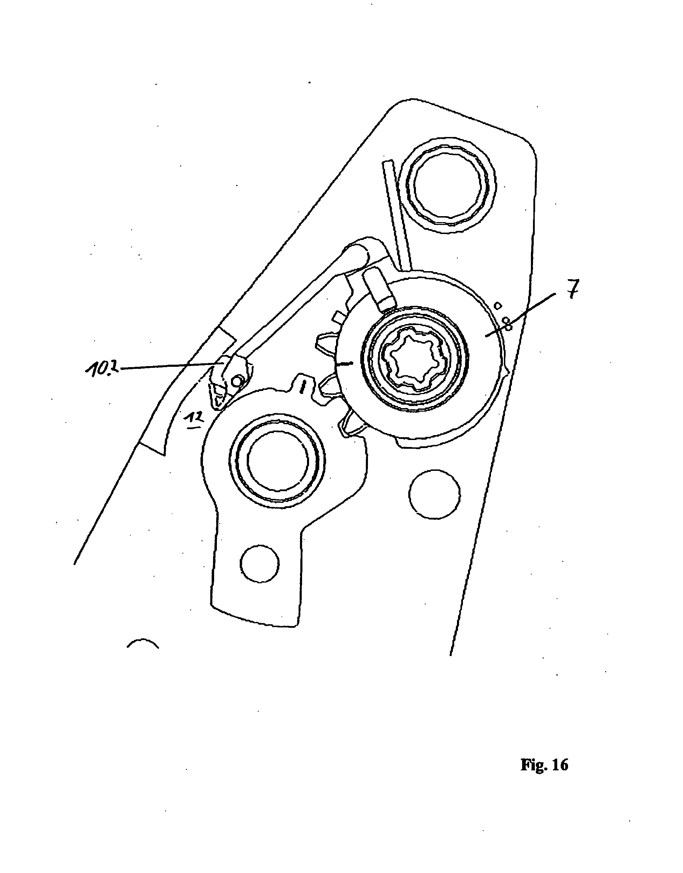

In **Figur 16** Ist die Vorrichtung gemäß **Figur 15** im entsicherten Zustand dargestellt. Das Freilaufelement 10.2 ist von dem Antrieb 7 an das obere Ende des Spaltes 12 gezogen worden, wo es nicht mehr sichernd auf die Verrastplatte 6 wirkt, die somit ebenfalls von dem Antrieb 7 gegen den Uhrzeigersinn verdreht werden kann, so dass die Verrastplatte 6 nicht mehr sichernd mit der Verrastklinke 4 zusammen wirkt. Das Verschieben des Freilaufelementes muss so erfolgen, dass das Freilaufelement nicht blockiert. Bezüglich der Vorteile der Vorrichtung gemäß den **Figur 15** und **16** bei hohen Fertigungstoleranzen wird auf die vorher gemachten Ausführungen verwiesen.

### Bezugszeichenliste:

- 100: Vorrichtung
- 1: Erstes Beschlagteil
- 2: Zweites Beschlagteil
- 2.1: Zweite Beschlagteilkomponente, Blockierungsmittel, Vorsprung
- 2.1.1: Kontur des Blockierungsmittel
- 3: Drehachse
- 4: Verrastklinke
- 4.2: Anlagefläche
- 5: Form- und/oder Kraftschlussmittel der Verrastklinke, Verzahnung
- 5.1: Gegenverzahnung
- 6: Verrastplatte
- 6.1: Drittes Form- und/oder Kraftschlussmittel, Kontur
- 6.2: Anlagefläche
- F: Freigabeposition der Verrastplatte
- R: Rastposition der Verrastplatte
- R'6.1: Radius der Kontur 6.1
- R"6.1: Radius der Kontur 6.1 Antriebmittel
- 7.1: Sicherungssegment
- 7.11 - 7.1 i: Erstes Form- und/oder Kraftschlussmittel
- 7.11: Vorderer Zahn des ersten Form- und/oder Kraftschlussmittels
- 7.2: Zweites Segment
- 7.21 - 7.2i: Zweites Form- und/oder Kraflschlussmittel
- 7.22: Hinterer Zahn des zweiten Form- und/oder Kraftschlussmittels
- 7.00: Zahnabstand
- 7.01: Übergangszahnabstand
- A: Antriebposition des Sicherungssegmentes des Antriebmittels
- S: Sicherungsposition des Sicherungssegmentes des Antriebmittels
- 8.1: Erstes Kraftmittel
- 8.2: Zweites Kraftmittel
- 9: Antriebachse
- 10: Sicherungsmittel, Kugel
- 10.1: Drehachse
- 10.2: Freilaufelement
- 10.3: Federmittel
- 11: Vorderer Rastzahn des dritten Form- und/oder Kraftschlussmfttels, Verbindungsmittel
- 12: Keilwellenprofil, Spalt
- 13.1: Anschlag des Sicherungssegmentes
- 13.2: Gegenanschlag des zweiten Segmentes
- 14: Führungsmittel
- 15: Verstellmittel
- 16: Kontur des vorderen Rastzahns der dritten Form- und/oder Kraftschlussmittel

## Patentansprüche

1. Vorrichtung (100), insbesondere für einen Kraftfahrzeugsitz, mit der das Verstellen eines ersten Beschlagteils (1) und eines zweiten Beschlagteils (2) relativ zueinander verriegelbar und entriegelbar ist, mit einem Antriebmittel (7), einer Verrastplatte (6) und einer Verrastklinke (4), wobei die Verrastklinke (4) durch Verrasten mit dem ersten Beschlagteil (1) relativ zu diesem arretierbar ist, wobei die Verrastplatte (6) mittels dem Antriebmittel (7) reversibel verstellbar ist, wobei die Verrastplatte (6) das Verstellen der Verrastklinke (4) in einer Rastposition (R) verriegelt, und in einer Freigabeposition (F) entriegelt, **dadurch gekennzeichnet, dass** das Antriebmittel (7) ein Sicherungssegment (7.1) zum Sichern der Verrastplatte (6) gegen Selbstöffnen aufweist.

2. Vorrichtung (100) zum Verriegeln und zum Entriegeln, insbesondere eines Beschlages zum Verstellen von Teilen eines Sitzes, insbesondere eines Kraftfahrzeugsitzes, und insbesondere nach Anspruch 1, die ein erstes Beschlagteil (1), eine Verrastklinke (4) und wenigstens eine Verrastplatte (6) aufweist, wobei die Verrastklinke (4) durch Verrasten mit dem ersten Beschlagteil (1) relativ zu diesem arretierbar ist, wobei die Verrastplatte (6) in eine das Verrasten sichernde Rastposition (R) und in eine das Verrasten nicht sichernde Freigabeposition (F) verstellbar ist, **dadurch gekennzeichnet, dass** die Vorrichtung (100) ein Antriebmittel (7) umfasst, das zumindest teilweise reversibel von einer Antriebposition (A) in eine Sicherungsposition (S) verstellbar ist, wobei das Verstellen der Verrastplatte (6) von der Rastposition (R) in die Freigabeposition (F) nur in der Antriebposition (A) möglich ist.

3. Vorrichtung (100) nach einem der vorherigen Ansprüche, **dadurch gekennzeichnet, dass** das Antriebmittel (7) ein Sicherungssegment (7.1) und ein zweites Segment (7.2) aufweist.

4. Vorrichtung (100) nach einem der vorherigen Ansprüche, **dadurch gekennzeichnet, dass** das Antriebmittel (7) um eine Antriebachse (9) drehbar ist, dass das Sicherungssegment (7.1) durch Drehen des Antriebmittels (7) um die Antriebachse (9) von der Sicherungsposition (S) in die Antriebposition (A) und die Verrastplatte (6) durch Drehen des Antriebmittels (7) um die Antriebachse (9) von der Rastposition (R) in die Freigabeposition (F) und zurück verstellbar ist.

5. Vorrichtung (100) nach einem der vorherigen Ansprüche, **dadurch gekennzeichnet, dass** das Sicherungssegment (7.1) entgegen der Kraft eines ersten Kraftmittels (8.1) um die Antriebachse (9) drehbar ist.

6. Vorrichtung (100) nach einem der vorherigen Ansprüche, **dadurch gekennzeichnet, dass** das Sicherungssegment (7.1) ein erstes Form- und/oder Kraftschlussmittel (7.11 - 7.1 i) und das zweite Segment (7.2) ein zweites Form- und/oder Kraftschlussmittel (7.21 - 7.2i) aufweist, und dass das erste sowie das zweite Form- und/oder Kraftschlussmittel (7.11 - 7.1 i, 7.21 - 7.2i) zumindest teilweise mit einem dritten Form- und/oder Kraftschlussmittel (6.1) der Verrastplatte (6) in Eingriff sind.

7. Vorrichtung (100) nach einem der vorherigen Ansprüche, **dadurch gekennzeichnet, dass** das erste Form- und/oder Kraftschlussmittel (7.11 - 7.1 i) sowie das zweite Form- und/oder Kraftschlussmittel (7.21 - 7.2i) jeweils zumindest zwei Zähne mit demselben Zahnabstand (7.00) sind, und dass der Übergangszahnabstand (7.01) zwischen dem vorderen Zahn (7.11) des ersten Form- und/oder Kraftschlussmittels (7.11- 7.1i) und dem hinteren Zahn (7.22) des zweiten Form- und/oder Kraftschlussmittels (7. 21 - 7.2i), die aneinander angrenzen, ungleich dem Zahnabstand (7.00) ist, bevorzugt größer.

8. Vorrichtung (100) nach einem der Ansprüche 1 - 6, **dadurch gekennzeichnet, dass** das erste Form- und/oder Kraftschlussmittel (7.11 - 7.1 i) ein Sicherungsmittel (10) ist, das in der Rastposition (R) in Eingriff mit einem vorderen Rastzahn (11) des dritten Form- und/oder Kraftschlussmittels (6.1) der Verrastplatte (6) ist.

9. Vorrichtung (100) nach einem der Ansprüche 8, **dadurch gekennzeichnet, dass** das zweite Segment (7.2) entgegen der Kraft eines zweiten Kraftmittels (8.2) um die Antriebachse (9) drehbar ist.

10. Vorrichtung (100) nach Anspruch 8, **dadurch gekennzeichnet, dass** das Sicherungsmittel (10) ein Verstellmittel (15) umfasst, das in der Rastposition (R) an einer Kontur (16) des vorderen Rastzahns (11) anliegt.

11. Vorrichtung nach einem der vorherigen Ansprüche, **dadurch gekennzeichnet, dass** die Verrastklinke (4) Form- und/oder Kraftschlussmittel (5) aufweist, mit denen sie in der Rastposition (R) der Verrastplatte (6) mit dem ersten Beschlagteil (1) form- und/oder kraftschlüssig zusammenwirkt.

12. Vorrichtung nach einem der vorherigen Ansprüche, **dadurch gekennzeichnet, dass** die Verrastklinke (4) um eine Drehachse (3) drehbar am zweiten Beschlagteil (2) angeordnet ist.

13. Vorrichtung nach einem der vorherigen Ansprüche, **dadurch gekennzeichnet, dass** die Verrastplatte (6) in der Freigabeposition (F) mit der Verrastklinke (4) form- und/oder kraftschlüssig zusammenwirkt, so dass die Verrastklinke (4) nicht form- und/oder kraftschlüssig mit dem ersten Beschlagteil (1) zusammenwirkt.

14. Vorrichtung nach einem der vorherigen Ansprüche, **dadurch gekennzeichnet, dass** das Sicherungssegment (7.1) zumindest einen Anschlag (13.1) und das zweite Segment (7.2) zumindest einen Gegenanschlag (13.2) aufweist.

15. Vorrichtung (100), insbesondere für einen Kraftfahrzeugsitz, mit der das Verstellen eines ersten Beschlagteils (1) und eines zweiten Beschlagteils (2) relativ zueinander verriegelbar und entriegelbar ist, mit einem Antriebmittel (7), einer Verrastplatte (6) und einer Verrastklinke (4), wobei die Verrastklinke (4) durch Verrasten mit dem ersten Beschlagteil (1) relativ zu diesem arretierbar ist, wobei die Verrastplatte (6) mittels dem Antriebmittel (7) reversibel verstellbar ist, wobei die Verrastplatte (6) das Verstellen der Verrastklinke (4) in einer Rastposition (R) verriegelt, und in einer Freigabeposition (F) entriegelt, **dadurch gekennzeichnet, dass** zwischen die Außenkontur (6.1) der Verrastplatte (6) und einem Blockierungsmittel (2.1), das an dem zweiten Beschlagteil angeordnet ist, ein Sicherungsmittel (10) anbringbar ist.

16. Vorrichtung (100) nach Anspruch 15, **dadurch gekennzeichnet, dass** das Sicherungsmittel mit dem Antriebmittel (7) verbunden ist.

17. Vorrichtung (100) nach Anspruch 16, **dadurch gekennzeichnet, dass** bei einer Verstellung der Lage der Verrastplatte (6) durch das Antriebmittel (7) ebenfalls eine Verstellung der Lage des Sicherungsmittels erfolgt.

18. Vorrichtung nach einem der Ansprüche 15 - 17, **dadurch gekennzeichnet, dass** das Sicherungsmittel (10) eine Kugel ist.

19. Vorrichtung nach einem der Ansprüche 15 - 17, **dadurch gekennzeichnet, dass** das Sicherungsmittel (10) nur in einer Richtung drehbar gelagert ist.

20. Vorrichtung nach einem der Ansprüche 15 - 19, **dadurch gekennzeichnet, dass** zwischen der Verrastplatte (6), Blockierungsmittel (2.1) und dem Sicherungsmittel (10) ein oder kein Spiel vorhanden ist.

21. Sitz, **dadurch gekennzeichnet, dass** er eine Vorrichtung (100) nach einem der vorherigen Patentansprüche aufweist.

22. Verfahren zum Entriegeln einer Vorrichtung (100) zum Verriegeln und Entriegeln, wobei die Vorrichtung (100) ein Antriebmittel (7) mit einem Sicherungssegment (7.1) und einem zweiten Segment (7.2), eine Verrastplatte (6) sowie eine Verrastklinke (4) aufweist, **dadurch gekennzeichnet, dass** das Sicherungssegment (7.1) von einer Sicherungsposition (S) in eine Antriebposition (A) verstellt wird, bevor und/oder während die Verrastplatte (6) mittels dem Antriebmittel (7) von der Rastposition (R), in der sie das Verstellen der Verrastklinke (4) verriegelt, so dass die Vorrichtung (100) verriegelt ist, in eine Freigabeposition (F), in der sie das Verstellen der Verrastklinke (4) nicht verriegelt ist, so dass die Vorrichtung (100) entriegelt ist, verstellt wird.
